# EUROPEAN PATENT APPLICATION

(11) **EP 0 781 806 A2**
(43) Date of publication of application: **02.07.1997**
(21) Application number: 96118719.2
(22) Date of filing: 21.11.1996
(51) Int. Cl.: C08L 1/02

(54) **Cellulose powder pellets with a polyethylene terephthalate resin as a binder and method for manufacturing the same**

(30) Priority: 28.12.1995 JP 353205/95
(71) Applicant: INDUSTRIAL TECHNICAL R&D LABORATORY INC., Takarazuka-shi, Hyogo (JP)
(72) Inventor: Nakamura, Kenichi, Takarazuka-shi, Hyogo (JP)
(74) Representative: Glawe, Delfs, Moll & Partner

(57) **Abstract**

Cellulose powder pellets and a method for manufacturing the same, wherein dried cellulose powder produced by pulverizing paper or wood is impregnated with a liquid fireproof agent, and then the cellulose powder is dried to produce the heat-resistant cellulose powder. The heat-resistant cellulose powder, lubricant and pulverized polyethylene terephthalate resin are put into the heating kneader, and the mixture is kneaded under compression and heating to produce a paste material. The paste material is supplied to a twin screw extruder, the stick like parison having a small diameter extruded from the end of the extruder is cut into pieces, and the pieces are air-cooled to produce the cellulose powder pllets.

## Description

The invention relates to cellulose powder pellets and the method for manufacturing said pellets by effectively utilizing the trash or waste paper, sawdust, wood chips and wood pieces thinned out a forest and by making use of discarded PET (polyethylene terephthalate) bottles as the binder to produce the paper or wood powder pellets (hereinafter called cellulose powder pellets), to which the injection molding, extrusion, press molding, vacuum forming and air-compression molding are possible just as the conventional thermoplastic synthetic resins.

### PRIOR ART

The abandoned cellulosic materials such as paper and wood are not melted and have no fluidity even if they are pulverized, and therefore it is impossible to use them as the material for injection molding even when they are pulverized and granulated with an adhesive such as starch.

A conventional molding method for making use of waste paper and scrap wood materials is known, in which waste paper or scrap wood and synthetic resin powder are mixed, put into a mold and press-molded under heating and compression.

As an another molding method for utilizing the waste paper the water immersion pulp molding method is known, in which the waste paper is immersed into the water and is pulped by a pulper, a mold having a wire-net is dipped, the molten pulp is adhered to the wire net provided on the surface of the mold by applying suction force from the rear surface of the mold, the wire net is pulled out of the water and is reversed, and consequently the adhered pulp is heated and dried.

On the other hand, the PET (polyethylene terephthalate) bottles are recycled, pulverized, washed off, sorted, granulated and reused. In fact, however, this method is rarely considered due to the high cost.

In the conventional molding method, which press-molds the mixture of the pulverized paper or wood and the synthetic resin powder, there are following disadvantages;
① it is impossible to freely mold into complex shapes;
② the mechanical strength of the moldings is low; and
③ perfect water-resistance cannot be achieved.

In the conventional water immersion pulp molding method, there are also following disadvantages;
① it requires a large amount of thermal evergy to evaporate the water content;
② it requires long drying rooms resulting in the high cost for plant and equipment;
③ it requires the large equipment for a drainage disposal system since it employs an enormous amount of water; and
④ troubles of the mold having the wire net frequently take place, which require cost and time for repairs resulting in the high manufacturing cost.

At present, all of the trash paper is incinerated in garbage furnaces together with damp or half-dried trash and garbage. The waste paper floods in cities and streets, and the price for waste paper is approaching zero or even the disposal cost for the waste paper has to be paid nowadays. Most of the abandoned wood materials are also disposed in incinerators. Part of the wood pieces thinned out a forest, which have better qualities and preferable sizes, are utilized as the compilation material. In fact, however, many of them are left in the forest and decay.

On the other hand, an enormous amount of PET bottles are produced and distributed in the market today as the packaging containers. Part of discarded PET bottles are recycled and reproduced but most of them are disposed in incinerators since the reproduced pellets are more expensive than the virgin pellets.

### SUMMARY OF THE INVENTION

This invention is to effectively utilize the abandoned cellulosic materials such as the trash or waste paper in cities and the scrap wood and the abandoned PET (polyethylene terephthalate) resins such as the PET bottles, which are at present disposed in incinerators.

Accordingly, it is an object of the invention to provide the pellets produced by combining the abandoned cellulosic materials such as the waste paper, scrap wood and the abandoned polyethylene terephthalate resins such as the PET bottles, which are injection or extrusion moldable with conventional synthetic resin molding machines and to provide a method for granulating into the pellets so as to give the solutions to the waste pollution problem and to the effective utilization of natural resources.

It is another object of the invention to reduce the generation of carbon dioxide and to prevent the climatic disorder due to the temperature rise of the earth's atmosphere by reducing the incineration of the waste paper and the tropical rain forests.

It is still another object of the invention to provide the paper or wood powder pellets so that the thermal energy of the moldings made of the pellets is low when incinerated and the incinerator is not damaged with the high temperature.

The melting or fusion point of the scrap PET bottles is 240 - 270 °C (Celsius degree). If the scrap PET bottles as the binder are mixed with the pulverized paper or wood and the mixture is heated to the melting temperature of the polyethylene terephthalate resin, the pulverized paper or wood is carbonized to become black ashes and the objects of the invention cannot be achieved. Accordingly, the heat-resistant temperature of the cellulose powder must be raised over the melting or fusion point of the polyethylene terephthalate resin; that is, higher than 240 - 270 °C in order to effectively utilize the mechanical strength, which is an advantage of the polyethylene terephthalate resin. In the invention, the dried cellulose powder is first impregnated with a liquid fire proof or flame-resistant agent so that the cellulose powder is resistant over the melting temperature (240 - 270 °C) of the polyethylene terephthalate resin, or preferably over 270 °C.

Next, the cellulose powder impregnated with the liquid fireproof agent is mixed or agitated with a lubricant and the lubricant is uniformly adhered on the surface of the cellulose powder, thereby giving fluidity or lubricity to the cellulose powder.

Next, the surface treated cellulose powder is kneaded under heating and compression with the polyethylene terephthalate resin powder as the binder for obtaining the paste material. The paste material is extruded by the twin screw extruder as a parison having a small diameter, the parison is cut into granules and the granules are cooled to produce the pellets.

It is preferable that the dried paper powder is pulverized to less than a 1 mm pass, the dried wood powder is pulverized to less than a 40 mesh, the pellets contain the cellulose powder greater than 50 % by weight and the some amount of carbon fiber or glassfiber chips are added when kneading into the paste material in order to reinforce the mechanical strength.

### BRIEF DESCRIPTION OF THE DRAWINGS

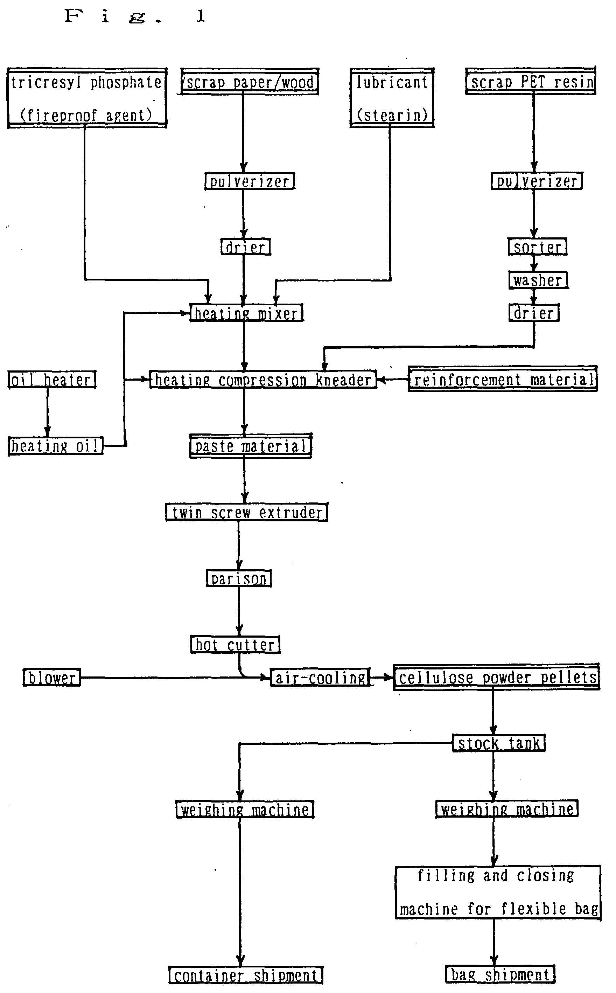

Figure 1 is a schematic diagram showing the manufacturing processes of the embodiments for the cellulose powder pellets of the invention.

### DETAILED DESCRIPTION OF THE PREFERRED EMBODIMENT

As described above the PET (polyethylene terephthalate) resin has the high melting or fusion point of 240 - 270 °C (Celsius degree). If the mixture of the pulverized paper or wood and the scrap PET bottles as the binder are heat fused, the cellulose powder is carbonized and the object of the invention cannot be achieved. Therefore, the heat-resistant temperature of the cellulose powder is raised higher than 270°C. In the invention, a liquid fireproof or flame-resistant agent, for example tricresyl phosphate (TCP), is impregnated into the cellulose powder so that the heat-resistant temperature is kept above 270°C. Tricresyl phosphate is a liquid phosphoric incombustible plasticizer having a high boiling point of 285°C. The tricresyl phosphate is coated on and impregnated into the surface of the cellulose powder such as the pulverized paper and wood, which makes it possible to maintain the heat-resistant temperature above 270°C and provides the plasticity.

Further, stearin as a lubricant is added to the heat-resistant cellulose powder and the mixtrure is kneaded under heating. The stearin is fused and coated on all the surcace of the cellulose powder, thereby providing the fluidity or lubricity. The polyethylene terephthalate resin powder is added to the heat-resistant cellulose powder having the fluidity and the mixture is kneaded by a kneader under compression and heating. The polyethylene terephthalate resin is fused at 240 - 270°C and the mixture becomes the paste material. The paste material is extruded by the twin screw extruder and is hot cut into 3 mm long pellets having 3 mm diameter, which are then cooled to produce the cellulose powder pellets with the polyethylene terephthalate resin as the binder.

The embodiments of the invention are disclosed hereinafter; however, the scope of the invention is not restrictive to the embodiments.

In the first embodiment, the main ingredient is the pulverized waste paper, which is made to the heat-resistant paper powder by the tricresyl phosphate (TCP), and the heat-resistant paper powder is granulated into the paper powder pellets with the scrap polyethylene terephthalate resin as the binder. The ratio of the composition is as follows:

| | | |
|---|---|---|
| 1 mm pass waste paper powder (main ingredient) | 51.0 % | 204.0 kg |
| 5 mm pass pulverized PET resin (binder) | 39.6 % | 158.4 kg |
| liquid tricresyl phosphate (fireproof agent) | 2.5 % | 10.0 kg |
| stearin powder (lubricant) | 1.0 % | 4.0 kg |
| glassfiber chips (3 mm) | 5.9 % | 23.6 kg |
| Total | 100.0 % | 400.0 kg |

The waste newsprint paper is employed as the main ingredient, which is pulverized to 1 mm pass. The scrap PET bottles pulverized to 5 mm pass are employed as the pulverized polyethylene terephthalate resin, which plays the role of the binder: the impurities such as vinyl chloride(PVC) are removed, and then washed and dried to obtain only the polyethylene terephthalate resin. The liquid tricresyl phosphate (TCP) as the fireproof agent, the stearin as the lubricant and the 3 mm long glassfiber chips as the reinforcement material are utilized.

In the first place, the dried pulverized waste newsprint paper (1 mm pass) 204 kg is put into the 500 liter heating mixer and is heated to 100 °C. Tricresyl phosphate 10 kg is added into the mixer and the mixture is agitated under heating in 5 minutes. Further, stearin 4 kg is put into the mixer and the mixture is agitated in 5 munutes at 150°C so that the pulverized waste paper becomes the heat-resistant paper powder having the fluidity. The heat-resistant paper powder 218 kg, pulverized polyethylene terephthalate resin 158.4 kg and glassfiber chips (3 mm) 23.6 kg are put into the 500 liter heating compression kneader-mixer and the mixture is kneaded under heating and compression in 15 minutes at 270 °C by introducing the heating oil into the jacket of the kneader so that the mixture is all fused and kneaded to produce the paste material.

The paste material is forcefully put into the twin screw extruder and is extruded as the parison having 3 mm diameter. The parison is hot cut into 3 mm long pellets and is forwarded into the pellet tank while being air-cooled to produce the paper powder pellets(cellulose powder pellets) with the polyethylene terephthalate resin as the binder.

In this manner, one batch of the paper powder pellets 400 kg is processed with the 500 liter heating compression kneader in 20 minutes and the paper powder pellets 1,200 kg are manufactured per hour. The mechanical properties of the moldings made of the paper powder pellets are as follows. The tensile fracture strength is 800 kg/cm² and the tensile fracture elongation is 2.3 %. The specific gravity is 1.44, the modulus of flexural elasticity is 60,000 kg/cm², the Izod impact stength is 5.0 kgcm/cm, the thermal deformation temperature with a 4.6 kg/ cm² load is 240 °C, the water absorption is 0.5 %/24 hour, the mold shrinkage is 0.2 % and the fusion point is 260 °C. Accordingly, the moldings having good mechanical properties and strength in practical use are manufactured from the paper powder pellets of the embodiment. Also, the calorific value is 5,000 - 6,000 kcal/kg when incinerating the moldings and the moldings can be incinerated without troubles in the incinerator.

In the second embodiment, the main ingredient is the pulverized scrap wood, which is made to the heat-resistant wood powder by the tricresyl phosphate (TCP), and the heat-resistant wood powder is granulated into the wood powder pellets with the scrap polyethylene terephthalate resin as the binder. The ratio of the composition is as follows:

| | | |
|---|---|---|
| 100 mesh wood powder (main ingredient) | 51.0 % | 204.0 kg |
| 5 mm pass pulverized PET resin (binder) | 39.6 % | 158.4 kg |
| liquid tricresyl phosphate (fireproof agent) | 2.5 % | 10.0 kg |
| stearin powder (lubricant) | 1.0 % | 4.0 kg |
| carbon fiber chips (3 mm) | 5.9 % | 23.6 kg |
| Total | 100.0 % | 400.0 kg |

The sawdust pulverized to 100 mesh is employed as the wood powder of the main ingredient. The scrap PET bottles are employed as the polyethylene terephthalate resin of the binder, which are pulverized to 5 mm pass, the impurities such as vinyl chloride (PVC) are removed thereafter, and then washed and dried to obtain only the polyethylene terephthalate resin. The liquid tricresyl phosphate (TCP) as the fireproof agent, the stearin powder as the lubricant and the 3 mm long carbon fiber chips as the reinforcement material are utilized.

In the first place, the dried wood powder 204 kg is put into the 500 liter heating mixer, tricresyl phosphate 10 kg is added into the mixer and the mixture is agitated under heating in 5 minutes so that the wood powder is impregnation coated with the tricresyl phosphate and becomes the heat-resistant wood powder. Further, stearin 4 kg is put into the mixer and the mixture is agitated in 5 munutes at 150 °C so that the wood powder becomes the heat-resistant wood powder having the fluidity.

The heat-resistant wood powder 218 kg, pulverized polyethylene terephthalate resin 158.4 kg and carbon fiber chips (3 mm) 23.6 kg are put into the 500 liter compression heating kneader-mixer and the mixture is kneaded under heating and compression in 15 minutes at 270°C by introducing the heating oil into the jacket of the kneader-mixer so that the mixture is all fused and kneaded to produce the paste material. The paste material is forcefully put into the twin screw extruder and is extruded as the parison having 3 mm diameter. The parison is hot cut into 3 mm long pellets and is forwarded into the pellet tank while being air-cooled to produce the wood powder pellets (cellulose powder pellets) with the polyethylene terephthalate resin as the binder.

In this manner, one batch of the wood powder pellets 400 kg is processed with the 500 liter heating compression kneader in 20 minutes and the wood powder pellets 1,200 kg are manufactured per hour. The mechanical properties of the moldings made of the wood powder pellets are as follows. The tensile fracture strength is 900 kg/cm² and the tensile fracture elongation is 2.0 %. The specific gravity is 1.12, the modulus of flexural elasticity is 60,000 kg/cm², the Izod impact stength is 5.0 kgcm/cm, the thermal deformation temperature with a 4.6 kg/ cm² load is 240 °C, the water absorption is 0.5 %/24 hour, the mold shrinkage is 0.2 % and the fusion point is 260 °C. Accordingly, the moldings having good mechanical properties and strength in practical use are manufactured from the wood powder pellets of the embodiment.

According to the cellulose powder pellets with the polyethylene terephthalate resin as the binder described in claim 1 and the method for manufacturing the cellulose powder pellets described in claim 2, the waste or trash paper and the scrap wood normally disposed in incinerators can be supplied as the pellets, which are moldable into a product having a random, complex shape by means of injection molding or extrusion. Accordingly, the moldings made of the cellulose powder pellets by the invention are utilizable in place of the conventional synthetic resin made moldings, and the trash paper, scrap wood and scrap polyethylene terephthalate resins are effectively used. The pollution problem caused by the incineration of the waste is solved and the recycling of the natural resources is achieved. The moldings made of the cellulose powder pellets of the invention are recyclable after use, and are pulverized and pelleted again.

In the water immersion pulp molding method, which is a conventional waste paper reclamation method, the product price is costly since it requires a large amount of the equipment cost for the drainage disposal system and it employs an enormous amount of water. It is also probable that the method generates the filthy water problem. In the invention, however, the filthy water problem will not occur since the water is not employed in the production processes, and the products are supplied reasonably. The moldings manufactured by the invention, especially with the addition of the reinforcement material as described in claim 6, attain excellent mechanical properties and strength. The moldings without the reinforcement material lack the excellent mechanical strength; however, they are well moldable and can be used within the tolerance of the mechanical strength.

As another utilization of the invention, packing materials and building materials may be formed by the invention in place of conventional wooden materials. The products by the invention are corrosion-resistant and are not attacked by termites, thereby reducing the volume of hewing down the forest and making effective use of the natural resources. With the effective utilization of the trash paper, scrap wood and wood pieces thinned out a forest the amount of the waste to be disposed in the incinerators is reduced, which in turn reduces the generation of carbon dioxide and helps in preventing the climatic disorder due to the temperature rise of the earth's atmosphere.

## Claims

1. Cellulose powder pellets with a polyethylene terephthalate resin as a binder, wherein
dried cellulose powder is impregnated with a liquid fireproof agent to produce heat-resistant cellulose powder so that a heat-resistant temperature of the heat-resistant cellulose powder is higher than a melting temperature of a polyethylene terephthalate resin;
the heat-resistant cellulose powder, the polyethylene terephthalate resin and a lubricant are kneaded together under heating and compression to produce a paste material; and
said paste material is granulated and cooled.

2. A method for manufacturing cellulose powder pellets with a polyethylene terephthalate resin as a binder, comprising the steps of
impregnating a liquid fireproof agent into dried cellulose powder;
heating the cellulose powder for removing a solvent of the fireproof agent so as to produce dried heat-resistant cellulose powder having a heat-resistant temperature higher than a melting temperature of a polyethylene terephthalate resin;
adding a lubricant to the heat-resistant cellulose powder for giving fluidity and kneading with the polyethylene terephthalate resin under compression while heating at a temperature higher than the melting temperature of the polyethylene terephthalate resin and lower than the heat-resistant temperature of the heat-resistant cellulose powder so that a paste material is produced;
extruding the paste material with a twin screw extruder;
granulating the paste material extruded by hot-cutting; and
cooling the granulated paste material.

3. A method for manufacturing cellulose powder pellets with a polyethylene terephthalate resin as a binder according to claim 2, wherein said dried cellulose powder is paper powder pulverized to less than a 1 mm pass.

4. A method for manufacturing cellulose powder pellets with a polyethylene terephthalate resin as a binder according to claim 2, wherein said dried cellulose powder is wood powder pulverized to less than a 40 mesh-pass.

5. A method for manufacturing cellulose powder pellets with a polyethylene terephthalate resin as a binder according to claim 2, wherein said cellulose powder pellets contain the dried cellulose powder greater than 50 % by weight.

6. A method for manufacturing cellulose powder pellets with a polyethylene terephthalate resin as a binder according to claim 2, wherein carbon fiber or glassfiber chips are added when kneading into the paste material.
